# EUROPEAN PATENT APPLICATION

(11) **EP 1 413 465 A2**
(43) Date of publication of application: **28.04.2004**
(21) Application number: 03023885.1
(22) Date of filing: 21.10.2003
(51) Int. Cl.: B60H 3/06

(54) **Air conditioning and ventilation system for a passenger compartment of a vehicle**

(30) Priority: 22.10.2002 IT TO20020920
(71) Applicant: C.R.F. Società Consortile per Azioni, 10043 Orbassano (Torino) (IT)
(72) Inventor: Malvicino, Carloandrea, 10146 Torino (IT); Marzorati, Diego, 10136 Torino (IT); Bonino, Francesco, 12084 Mondovi' (IT)
(74) Representative: Jorio, Paolo

(57) **Abstract**

There is described an air conditioning and ventilation system (1) for the passenger compartment (2) of a vehicle, wherein an electrostatic filter (11) is located along a recirculating path (R) for the air in the passenger compartment (2), upstream from a ventilation device (5) and an air conditioning assembly (7), so as to intercept the recirculated air from the passenger compartment (2); and wherein an ion emitting device (12) is located along the recirculating path (R), downstream from the air conditioning assembly (7), to electrically charge the air in the passenger compartment (2).

## Description

The present invention relates to an air conditioning and ventilation system for a passenger compartment of a vehicle.

As is known, last-generation vehicles are typically equipped with an air conditioning system, which operates both as an air conditioner and a heater to respectively cool and heat the air inside the passenger compartment of the vehicle to maintain a constant temperature inside the passenger compartment regardless of the air temperature outside.

Air conditioning systems of this type normally comprise a cooling assembly and a heating assembly, which are located along a passenger compartment air recirculating and intake circuit, so that the air flows through them, to respectively cool and/or heat the air as a function of the required temperature inside the passenger compartment.

To eliminate pollutant particles in the recirculated air or in the outside air drawn into the passenger compartment of the vehicle, air conditioning systems of the above type are known to be equipped with a pollen filter, normally located along the air recirculating and intake path, at the heating and cooling assembly input, to trap any dust and pollen in the air before it is fed into the passenger compartment.

Unfortunately, in air conditioning systems of the above type, the extent to which pollutant particles are removed from the air is incomplete and unsatisfactory as regards small solid pollutant particles, and in particular those produced mainly by vehicle engine emissions and fed into the passenger compartment in the air intake of the conditioning system.

This is particularly serious in the case of solid pollutant particles of less than 10µm in size - commonly referred to as particulate PM10 - which, not being eliminated by the pollen filter, are fed freely into the passenger compartment, where they remain suspended in the air, thus causing serious harm to the respiratory system of the occupants.

It is an object of the present invention to provide an air conditioning and ventilation system for a passenger compartment of a vehicle, designed to eliminate the aforementioned drawbacks.

According to the present invention, there is provided an air conditioning and ventilation system for a passenger compartment of a vehicle, comprising a recirculating circuit defining a recirculating path for the air of said passenger compartment; ventilation means located along said recirculating path; and air conditioning means located along said recirculating path, downstream from said ventilation means; said air conditioning and ventilation system being characterized by also comprising: an electrostatic filter located along said recirculating path to intercept the recirculated air; and ion emitting means located along said recirculating path, downstream from said air conditioning means.

A non-limiting embodiment of the present invention will be described by way of example with reference to the accompanying drawings, in which:
Figure 1 shows, schematically, an air conditioning and ventilation system for a passenger compartment of a vehicle, in accordance with the teachings of the present invention;
Figure 2 shows, schematically, a first variation of the Figure 1 air conditioning and ventilation system for a passenger compartment of a vehicle;
Figure 3 shows, schematically, a second variation of the Figure 1 air conditioning and ventilation system for a passenger compartment of a vehicle.

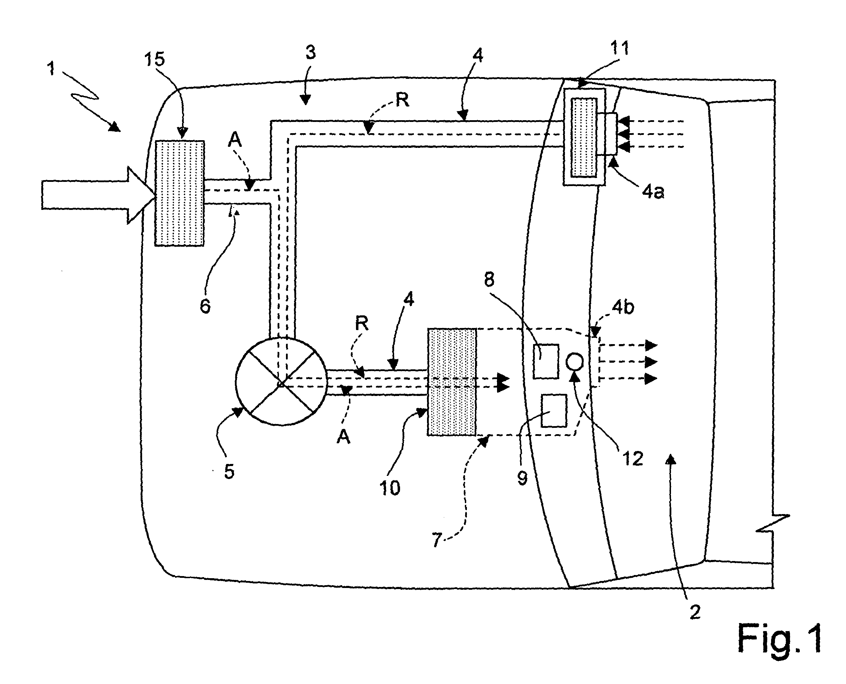

Number 1 in Figure 1 indicates as a whole an air conditioning and ventilation system for a passenger compartment of a vehicle, designed to condition, and simultaneously filter pollutant particles from, the air inside the passenger compartment 2.

Air conditioning and ventilation system 1 is housed inside the vehicle engine compartment 3, and comprises: a recirculating circuit 4 defining a recirculating path (hereinafter indicated R) for the air inside passenger compartment 2; and a ventilation device 5, e.g. a fan, located along recirculating path R to circulate the air along recirculating circuit 4 and therefore inside passenger compartment 2.

More specifically, recirculating circuit 4 communicates with passenger compartment 2 via an inlet 4a, through which the air inside passenger compartment 2 is drawn, and via an outlet 4b, through which the recirculated air is fed into passenger compartment 2. In the Figure 1 example, in particular, inlet 4a and outlet 4b are built into the dashboard of the vehicle, so as to be housed inside passenger compartment 2.

Air conditioning and ventilation system 1 also comprises an intake circuit 6 for drawing outside air into passenger compartment 2, and which is connected to recirculating circuit 4 upstream from ventilation device 5, so as to define an intake path (hereinafter indicated A) along which outside air is drawn into passenger compartment 2.

Air conditioning and ventilation system 1 also comprises an air conditioning assembly 7, which is located downstream from ventilation device 5, is supplied by ventilation device 5 with air circulating in recirculating circuit 4 and/or intake circuit 6, and provides for cooling and/or heating and feeding the air into passenger compartment 2.

More specifically, air conditioning assembly 7 is located at the output of recirculating circuit 4, e.g. at outlet 4b, and comprises an evaporator or radiator 8 for removing heat from the air and expelling it from passenger compartment 2 via a condenser (not shown); and a heating device 9 for heating the air before it is fed into passenger compartment 2.

Evaporator or radiator 8 and heating device 9 are located at an end portion common to both recirculating path R and intake path A, so as to condition the recirculated air inside passenger compartment 2, or the air intake from outside passenger compartment 2.

In the Figure 1 example, the recirculated air path R, indicated by the dash line, extends successively through inlet 4a, ventilation device 5, air conditioning assembly 7, and outlet 4b, while the outside air intake path A, also indicated by a dash line, extends successively through ventilation device 5, air conditioning assembly 7, and outlet 4b.

Evaporator or radiator 8 and heating device 9 are controlled by an electronic control device (not shown) for adjusting heating and/or cooling of the air as a function of the passenger compartment temperature required by the user. Air conditioning assembly 7 is a known type, and therefore not described in detail.

Preferably, though not necessarily, air conditioning and ventilation system 1 also comprises a first air filter 10 located at the input of air conditioning assembly 7 to remove pollutant particles from the air.

More specifically, first air filter 10 is a known type, is located along recirculating and intake paths R and A, downstream from ventilation device 5, and provides for removing part of the dust, pollen and pollutant particles in the air before it is fed to air conditioning assembly 7.

Unlike known air conditioning and ventilation systems, air conditioning and ventilation system 1 also comprises an electrostatic filtration device 11 for removing pollutant particles from the air, and which is located along recirculating path R, upstream from both ventilation device 5 and air conditioning assembly 7, so as to intercept the recirculated air and retain the pollutant particles; and an ion emitting device 12 located downstream from air conditioning assembly 7, at the end portion common to recirculating and intake paths R and A.

Electrostatic filtration device 11 may be defined by an electrostatic filter of the type described, for example, in Italian Patent No. 85611 filed by Expansion Electronic S.r.l., and/or in Italian Patent No. 1247069 filed by Nardotto Giannantonio. In the example shown, electrostatic filter 11 comprises an electrostatic filtration unit (not shown), which electrically charges the pollutant microparticles in the air in passenger compartment 2, and retains them by means of a number of metal plates (not shown) charged alternately with an electric charge of opposite sign.

Electrostatic filter 11 is located along recirculating path R, at the input of recirculating circuit 4, and comprises an inlet (not shown) facing inlet 4a of recirculating circuit 4, so as to directly remove the particles from the recirculated air from passenger compartment 2, and not intercept the outside air fed in by intake circuit 6.

In the above configuration, electrostatic filter 11 can be housed inside a seat (not shown) formed in the dashboard of the vehicle, so that electrostatic filter 11 can advantageously be removed from the dashboard to clean off the trapped pollutant particles as required.

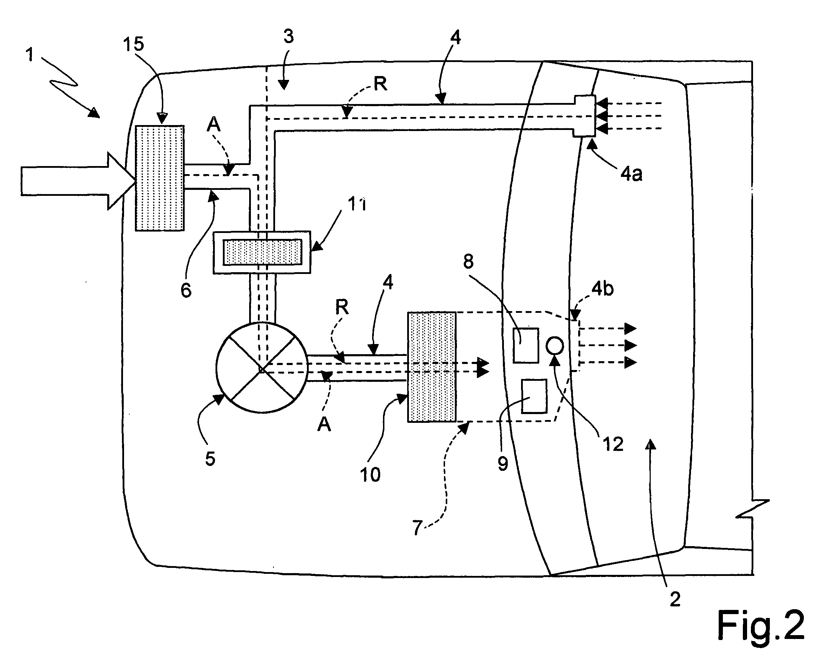

In the Figure 2 variation, electrostatic filter 11 may be located along intake path A, so as to selectively intercept, in addition to the recirculated air from inside passenger compartment 2, also part of the outside air intake, thus removing, not only the pollutant particles suspended in the recirculated air from passenger compartment 2, but also those in the air intake from outside passenger compartment 2.

In connection with the above, it should be pointed out that laboratory tests have shown that, during operation of air conditioning and ventilation system 1, electrostatic filter 11 is advantageously capable of retaining particulate, i.e. pollutant solid microdust suspended in the air and ranging between 0.3µm and 10µm in diameter (indicated PM10).

Electrostatic filter 11 may conveniently be activated, for example, by a control device (not shown), e.g. a control button, for selectively only recirculating air along recirculating path R, or only drawing outside air into passenger compartment 2.

Ion emitting device 12 is located downstream from air conditioning assembly 7, at the end portion of recirculating and intake paths R and A, and provides for negatively ionizing the air fed into the passenger compartment, so as to increase the negative electrical charge concentration. Laboratory tests, in fact, have shown that, besides enhancing the wellbeing of the occupants of passenger compartment 2, increasing the negative electrical charge concentration of the air fed into passenger compartment 2 also advantageously slows down the growth of bacteria in the passenger compartment.

In the Figure 1 and 2 examples, ion emitting device 12 is housed inside air conditioning assembly 7, at outlet 4b, so as to diffuse ions inside passenger compartment 2.

To further filter the outside air drawn into passenger compartment 2, intake circuit 6 is provided, at its input at the front the vehicle, with a second air filter 15 for filtering pollen or other similar pollutant particles in the outside air intake.

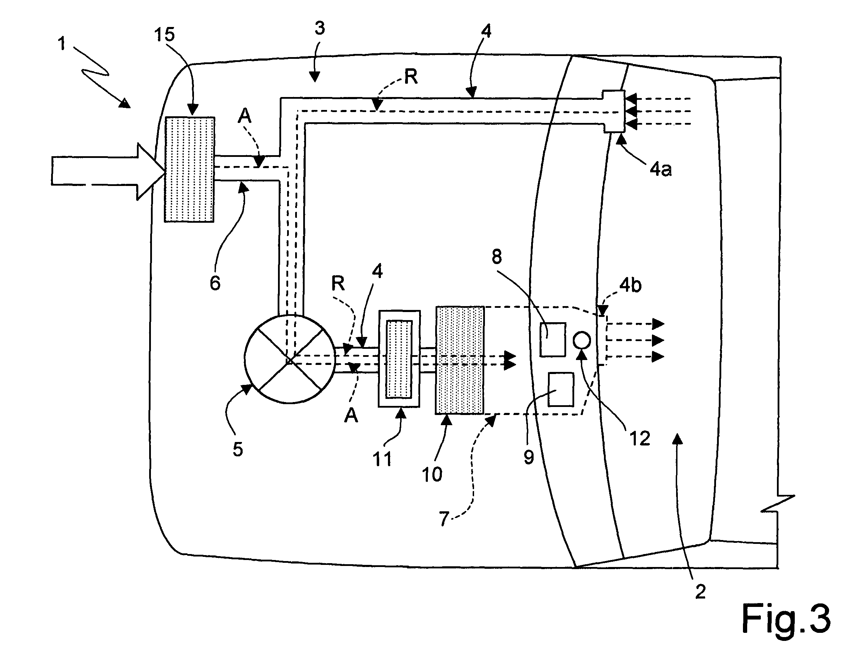

In a second variation shown in Figure 3, electrostatic filter 11 of air conditioning and ventilation system 1 is located along recirculating path R, downstream from ventilation device 5 and upstream from air conditioning assembly 7, so as to intercept the recirculated air.

Operation of air conditioning and ventilation system 1 is easily deducible from the foregoing description, with no further explanation required.

The advantages of air conditioning and ventilation system 1 according to the present invention are obvious: the electrostatic filter of air conditioning and ventilation system 1 provides for filtering pollutant solid particles that cannot be intercepted by the air filter, thus greatly improving the pollutant filtration efficiency of air conditioning and ventilation system 1.

Moreover, as stated, in addition to improving the wellbeing of the occupants of the vehicle, ion emitting device 12 also has the advantage of greatly slowing down the growth of bacteria in passenger compartment 2, with obvious benefits to the occupants.

Clearly, changes may be made to the air conditioning and ventilation system as described and illustrated herein without, however, departing from the scope of the present invention.

## Claims

1. An air conditioning and ventilation system (1) for a passenger compartment (2) of a vehicle, comprising a recirculating circuit (4) defining a recirculating path (R) for the air of said passenger compartment (2); ventilation means (5) located along said recirculating path (R); and air conditioning means (7) located along said recirculating path (R), downstream from said ventilation means (5); said air conditioning and ventilation system (1) being **characterized by** also comprising: an electrostatic filter (11) located along said recirculating path (R) to intercept the recirculated air; and ion emitting means (12) located along said recirculating path (R), downstream from said air conditioning means (7).

2. An air conditioning and ventilation system for a passenger compartment of a vehicle, as claimed in Claim 1, **characterized in that** said electrostatic filter (11) is located along said recirculating path (R), upstream from said ventilation means (5).

3. An air conditioning and ventilation system for a passenger compartment of a vehicle, as claimed in Claim 1, **characterized in that** said electrostatic filter (11) is located along said recirculating path (R), downstream from said ventilation means (5).

4. An air conditioning and ventilation system for a passenger compartment of a vehicle, as claimed in any one of the foregoing Claims, **characterized by** comprising an intake circuit (6) for drawing outside air into said passenger compartment (2) and defining an intake path (A); said electrostatic filter (11) also intercepting part of said outside air drawn in by said intake circuit (6) .

5. An air conditioning and ventilation system for a passenger compartment of a vehicle, as claimed in Claim 4, **characterized in that** said electrostatic filter (11) is located along said intake path (A) to intercept part of said outside air.

6. An air conditioning and ventilation system for a passenger compartment of a vehicle, as claimed in any one of Claims 1 to 3, **characterized by** comprising an intake circuit (6) for drawing outside air into said passenger compartment (2) and defining an intake path (A); said electrostatic filter (11) not intercepting said outside air drawn in by said intake circuit (6).

7. An air conditioning and ventilation system for a passenger compartment of a vehicle, as claimed in Claim 6, **characterized in that** said electrostatic filter (11) is located at a first opening (4a) by which said recirculating circuit (4) communicates with said passenger compartment (2).

8. An air conditioning and ventilation system for a passenger compartment of a vehicle, as claimed in Claim 7, **characterized in that** said electrostatic filter (11) is housed inside a seat formed on the dashboard of said vehicle, so as to be removable from the dashboard.

9. An air conditioning and ventilation system for a passenger compartment of a vehicle, as claimed in any one of the foregoing Claims, **characterized in that** said ion emitting means (12) are located at a second opening (4b) by which said recirculating circuit (4) communicates with said passenger compartment (2).

10. An air conditioning and ventilation system for a passenger compartment of a vehicle, as claimed in any one of the foregoing Claims, **characterized in that** said air conditioning means (7) comprise an evaporator (8).

11. An air conditioning and ventilation system for a passenger compartment of a vehicle, as claimed in any one of the foregoing Claims, **characterized in that** said air conditioning means (7) comprise heating means (9).

12. An air conditioning and ventilation system for a passenger compartment of a vehicle, as claimed in any one of the foregoing Claims, **characterized by** comprising a first air filter (10) located at the input of said air conditioning means (7).

13. An air conditioning and ventilation system for a passenger compartment of a vehicle, as claimed in any one of Claims 3 to 12, **characterized by** comprising a second air filter (15) located along said intake path (A) to filter pollen or other similar pollutant particles from the outside air intake.
